# EUROPEAN PATENT SPECIFICATION

(11) **EP 4 511 151 B1**
(45) Date of publication and mention of the grant of the patent: **01.04.2026**
(21) Application number: 23723064.4
(22) Date of filing: 21.04.2023
(51) Int. Cl.: B01D 46/52

(54) **FILTER ELEMENTS AND ASSEMBLIES**
FILTERELEMENTE UND ANORDNUNGEN
ÉLÉMENTS ET ENSEMBLES FILTRE

(30) Priority: 22.04.2022 EP 22169582
(43) Date of publication of application: 26.02.2025
(73) Proprietor: DONALDSON COMPANY, INC., Bloomington, MN 55431 (US)
(72) Inventor: CATOOR, Bart, Bloomington, MN 55431 (US); VERSTRAETE, Mathijs, Bloomington, MN 55431 (US); DECOSTER, Kristof, Bloomington, MN 55431 (US)
(74) Representative: IPLodge bv
(86) International application number: PCT/US2023/066083
(87) International publication number: WO 2023/205790

(56) References cited:
- US-A1- 2014 251 895
- US-B2- 11 167 234

## Description

### Technical field

The present disclosure relates to filter constructions for filtering fluids, such as liquids or gases, such as for instance air.

### Background art

Fluid streams can carry contaminant material such as dust and liquid particulate therein. In many instances, it is desired to filter some or all of the contaminant material from the fluid stream. For example, air flow streams to engines (for example combustion air streams) for motorized vehicles or for power generation equipment, gas streams to gas turbine systems and air streams to various combustion furnaces, carry particulate contaminant therein that should be filtered. It is preferred, for such systems, that selected contaminant material be removed from (or have its level reduced in) the air. A variety of fluid filter arrangements have been developed for contaminant removal. Typical fluids to be filtered are gases as for instance air, or liquids such as fuel or oil.

Fluid filter arrangements typically comprise a filter housing and a replaceable filter element or filter cartridge arranged operatively therein.

An air filter element typically comprises an inflow face and an outflow face for inflow of dirty and outflow of cleaned air respectively, and comprises a seal arranged and adapted for sealing against an inner surface of the filter housing to thereby separate a dirty side comprising unfiltered or less filtered air from a clean side comprising filtered or more filtered air in the filter housing.

Often filter housings comprise or should preferably comprise reinforcement structures, flow guiding structures or other structures on the inner sidewall of the housing, which form obstacles for a straightforward sealing configuration. In other words, such obstacles reduce design freedom for the filter element, for instance for the one or more seals of the filter element. Document US2014/251895 discloses a filter element in which the seal direction is parallel with a sidewall, upper wall or lower wall of the filter element or media pack.

Improvements are sought.

### Summary of the disclosure

It is an objective of the present disclosure to provide a filter element according to claim 1, and to provide a filter assembly according to the second independent claim.

In a first aspect of the present disclosure, a filter element is disclosed comprising a media pack and a seal, preferably for separating a filtered and unfiltered area in a fluid cleaner, for instance an air cleaner, the seal being directly or indirectly connected to the media pack in a sealing manner, the filter element comprising a longitudinal axis,
wherein the seal extends along a closed loop trajectory (i.e., it defines a single loop or band); and
wherein the seal defines a predetermined sealing direction with respect to the longitudinal axis along the closed loop trajectory;
and wherein the predetermined sealing direction is not constant along the loop trajectory. The seal structure is preferably path-connected, which means that a path can be drawn in the seal structure between every two points of the seal structure. Preferably the seal can comprise a single material or can be a composite seal made of different materials.

The media pack can for instance be a fluted media (also called z-type) media pack or a pleated media pack.

A fluted media pack typically comprises a plurality of flutes arranged between an inflow face and an outflow face of the media pack, wherein adjacent flutes are alternatingly closed at their inlet and outlet. An incoming air stream enters an open flute at the inflow face, which is closed at the outflow face, and is forced to pass through the filtration media of the wall separating the adjacent flutes. The filtered air then leaves the adjacent flute, which is closed at the inlet face, at the open side thereof, at the outflow face.

A pleated media pack comprises a sheet of filtration media which is pleated to increase its filtration surface. It typically defines a virtual inflow and outflow face defined by the peaks and valleys of the pleats. A pleated media pack can for instance also be configured to replace an equivalent fluted media pack by arranging one or more pleated media sheets in a corresponding volume in a suitable manner. In such case the pleated media pack defines a virtual inflow and outflow face of the filter element.

It will be appreciated that for any filter element having a seal, a skilled person can determine a (preferential or intrinsic) seal direction of that seal for that element. The seal direction can thus be predetermined. It can be determined at any location along the closed loop trajectory.

A seal direction can for instance be defined or recognized by the configuration of the filter element. It can at least partially or completely be derived from the relative location of the seal with respect to the media pack, e.g., with respect to the media pack's inflow and outflow faces. It can also at least partially or completely be derived from analyzing the presence and orientation of a support or reinforcement structure for the seal.

In embodiments of the present invention, the sealing direction is not constant and differs in at least two seal portions (longitudinal sections) along the loop trajectory.

Preferably, at any position along the loop trajectory of the seal, only a single (only one) seal direction can be defined.

According to preferred embodiments, in at least one seal portion, for instance one of the at least two seal portions with different seal direction, the seal direction is not parallel with an outer wall of the filter element or media pack, the outer wall comprising a sidewall, upper wall an lower wall of the filter element or media pack.

According to preferred embodiments, in at least one seal portion, for instance one of the at least two seal portions with different seal direction, the seal direction is not parallel with a sidewall of the filter element or media pack.

According to preferred embodiments, in at least one seal portion, for instance one of the at least two seal portions with different seal direction, the seal direction is not parallel (and preferably not perpendicular) with a corresponding and adjacent portion of the sidewall of the filter element or of the filter media pack.

According to preferred embodiments, in at least one seal portion, for instance one of the at least two seal portions with different seal directions, the seal direction lies in a plane that intersects the longitudinal axis of the filter element. In another view, any plane which comprises or is oriented along that seal direction intersects the longitudinal axis of the filter element.

The above features provide the advantage that a larger degree of design flexibility is provided for filter housings and filter assemblies. By embodying sealing surfaces in the housing and corresponding filter element sealing surfaces as more complex 3D surfaces, beyond what is existing in the prior art, new filter housings can be conceived that are more compact or that can fit with other engine or vehicle components in a more compact manner. Also, it allows providing new, alternative filter housings that may provide a better performance than existing housings. It also allows providing alternative filter elements that fit state of the art filter housings. It also allows the positioning of other housing components at locations of the filter housing where it was previously not possible to position them.

According to preferred embodiments, the seal makes a smooth and continuous transition (for instance in an intermediate portion) between the respective seal directions of a first and a second portion of said at least two seal portions.

According to preferred embodiments, the seal direction in an intermediate seal portion between the first and the second portion of the seal makes a continuous and preferably smooth transition (for instance in an intermediate portion) between the respective seal directions of a first (or any first) and a second (or any second) portion of the (or any) at least two seal portions.

Hereby each of those portions preferably extends over a length of the closed loop trajectory that is longer than 5%, preferably longer than 10%, preferably longer than 20% or longer than 25 % of the length of the loop trajectory. Hereby each of those portions preferably extends over a length of the closed loop trajectory that is longer than 0.5 cm, preferably longer than 1 cm, preferably longer than 2 or longer than 5 cm.

The seal direction can for instance be radially inward, outward or can be axial with respect to the media pack or more generally with respect to a longitudinal axis of the filter element or media pack.

The seal direction has been described in a manner such as to include a sense, without making separate reference to the sense along a respective seal direction (for instance a radially outward or inward sense), as this is supposed to be clear from the context and/or naming of the direction itself (e.g., radially inward or outward direction).

In preferred embodiments of the present disclosure, the predetermined sealing direction is not constant along the loop trajectory in that it comprises a first and a different, second seal portion (longitudinal sections) along the loop trajectory with different sealing directions, the sealing directions selected from the group of inward radial seal direction, outward radial seal direction and axial seal direction.

The seal direction can also vary within one of those three categories, for instance by having a dominating seal component in a first category and a minor component of one of the other categories. For instance, a dominating axial seal can comprise a minor radial component (inward or outward) and classifies as an axial seal. Also, a dominating radial seal (inward or outward) can comprise a minor axial component and classifies as an (inward or outward) radial seal. A seal direction can for instance be varied by changing the relative size or relative weight of these components.

Embodiments of the present disclosure provide a degree of freedom for manufacturing filter elements. For instance, the manufacturing of filter elements comprising a seal can still be achieved while the filter element itself would comprise an obstacle such as a reinforcement rib, flow guiding feature, handle etc. Also, a filter element comprising a seal can be designed that can successfully seal on an inner wall of a housing which comprising a physical obstacle such as a reinforcement rib or flow guiding means. Even for housings that would allow a certain filter element to seal, alternative filter elements can be developed that provide an alternative sealing pattern for sealing against the inner wall of the housing, i.e., that seal against an alternative sealing surface of the inner wall of the housing.

According to preferred embodiments, the seal is at least partially or completely circumferential to a longitudinal axis of the media pack. Preferably, the longitudinal axis of the media pack corresponds to the longitudinal axis of the filter element.

According to preferred embodiments, the seal is at least partially or completely circumferential to the media pack.

According to preferred embodiments, the filter element further comprises a support structure attached to the media pack in a sealing manner, wherein the seal is at least partially (or completely) supported by the support structure.

According to alternative preferred embodiments, the media pack itself constitutes the support structure. This can for instance be the case when the media, e.g. flutes of the media, has been reinforced by means of for instance a resin or otherwise at a location adjacent to the seal.

According to preferred embodiments, the predetermined seal direction is defined as the normal direction of a respective portion of the support structure supporting the corresponding seal portion.

According to preferred embodiments, the support structure comprises a smooth, continuous, band surface that follows the seal. Preferably the band surface corresponds to the closed loop trajectory of the seal. For each section or portion of the seal, there is a corresponding portion of the band surface supporting it. The predetermined seal direction of a portion of the seal is then defined as the direction defined by the normal on the corresponding portion of the band surface. For instance, the first and second seal portions of the seal correspond to the first and second portions of the support structure or smooth, continuous, band surface.

According to preferred embodiments, the band surface comprises a first portion and a different second portion along the closed loop trajectory (longitudinal sections), defining a first and a second normal direction respectively, the angle between the first normal direction and the axial direction of the filter element is different from the angle between the second normal direction and the axial direction of the filter element.

Preferably, at any position along the band surface, only a single (only one) normal direction can be defined.

According to preferred embodiments, at least one band surface portion comprises a normal direction which is not parallel with an outer wall (comprising sidewall, upper wall or lower wall) of the filter element or media pack.

According to preferred embodiments, at least one band surface portion comprises a normal direction which is not parallel with a sidewall of the filter element or media pack.

According to preferred embodiments, at least one band surface portion comprises a normal direction which is not parallel with a corresponding and adjacent portion of the sidewall of the filter element or media pack.

According to preferred embodiments, at least one band surface portion comprises a normal direction which lies in a plane that intersects the longitudinal axis of the filter element. In another view, any plane which comprises or is oriented along that normal direction intersects the longitudinal axis of the filter element.

According to preferred embodiments, the normal direction of the support structure makes a continuous and preferably smooth transition (for instance in an intermediate portion) between the respective normal directions of the band surface portions corresponding to the first and second seal portions.

Hereby each of those band portions preferably extends over a length of the closed loop trajectory that is longer than 5%, preferably longer than 10%, preferably longer than 20% or longer than 25% of the length of the loop trajectory.

Hereby each of those band portions along the closed loop trajectory preferably extends over a length of the closed loop trajectory that is longer than 0.5 cm, preferably longer than 1 cm, preferably longer than 2 cm or longer than 5 cm.

According to preferred embodiments, the filter element comprises a first seal portion along the loop trajectory wherein the predetermined sealing direction is radially outward from the longitudinal axis and a second seal portion along the loop trajectory wherein the predetermined sealing direction is axial, i.e., in a direction which corresponds to the longitudinal axis.

According to preferred embodiments, the filter element comprises a first seal portion along the loop trajectory wherein the predetermined sealing direction is radially inward towards the longitudinal axis and a second seal portion along the loop trajectory wherein the predetermined sealing direction is axial, i.e., in a direction which corresponds to the longitudinal axis.

According to preferred embodiments, the filter element comprises a first seal portion along the loop trajectory wherein the predetermined sealing direction is radially outward from the longitudinal axis and a second seal portion along the loop trajectory wherein the predetermined sealing direction is radially inward towards the longitudinal axis.

Filter elements typically have a first and a second axial end, and typically have a sidewall connecting the first and second ends. Fluted filter elements are typically wound or manufactured by stacking fluted sheets. Fluted filter elements typically have a round, obround, elliptical, rectangular or square transversal cross-section. Pleated filter element can for instance be planar ("panel filters") or can be tubular in nature. In the latter case a pleated sheet of filtration media is wound such as to define a hollow tube. In most cases a first axial end and a second axial end of the media pack can be defined.

According to preferred embodiments, a first seal portion or the first seal portion along the loop trajectory is provided at or on (directly or indirectly) an axial end of the media pack and a second seal portion or the second seal portion along the loop trajectory is provided at or on (directly or indirectly) a radially outwardly oriented portion of the media pack.

According to preferred embodiments, a first seal portion or the first seal portion along the loop trajectory is provided at or on (directly or indirectly) an axial end of the media pack and a second seal portion or the second seal portion along the loop trajectory is provided at or on (directly or indirectly) the axial end of the media pack.

According to preferred embodiments, a first seal portion or the first seal portion along the loop trajectory is provided at or on (directly or indirectly) a radially outwardly oriented portion of the media pack and a second seal portion or the second loop trajectory portion of the loop trajectory is provided at or on (directly or indirectly) the radially outwardly oriented portion of the media pack.

According to preferred embodiments, the seal is a polyurethane (PU) seal, for instance a foamed PU seal. The predetermined sealing direction of a polyurethane seal is typically the normal direction on its sealing surface. A sealing direction of a first seal portion can be different from a sealing direction of a second seal portion by having a substantially different angle between the normal direction and the longitudinal axis of the filter element.

According to more preferred embodiments, the seal comprises a lip seal. Preferably, the lip seal comprises a thermoplastic elastomer (TPE) or another flexible material suitable for providing the effect of sealing. Generally, the sealing direction of a lip seal on a filter element corresponds to the direction of the dominant component selected from the radial and axial components of the lip.

Preferably, the lip seal comprises an elongate base, having a front and a back surface, and an elongate flexible lip structure or lip extending from the front surface of the base. Preferably, it comprises a T-shaped transversal cross-section. The base is preferably planar in nature and makes an angle with the lip. The angle is preferably within the range of 30° to 90°. The angle is more preferably close to 90°, for instance within the range of 75° to 89°. According to preferred embodiment, the lip forms an oblique angle with respect to the axis of the filter element in a direction towards the inlet face of the filter element or media pack. This "symmetry-breaking" bias of the lip seal causes the lip seal to move in the right direction in use, for the lip seal to be optimally resistant to a difference in air pressure to which it is typically exposed. According to preferred embodiments, wherein the support structure comprises a smooth, continuous, band surface that follows the seal, the base of the lip seal is preferably attached to the band surface. Preferably, it is in direct or indirect contact with the band surface. The base of the lip seal is preferably substantially parallel or parallel to the smooth, continuous, band surface that follows it. In such embodiments, the angle between the lip and the band surface preferably corresponds to the angle between the lip and the base.

According to preferred embodiments, the angle between the lip seal and the base is constant along the closed loop trajectory. According to alternative embodiments, the angle between the lip seal and the base is not constant along the closed loop trajectory.

According to preferred embodiments, the lip seal comprises an elongate base having a front and a back surface, and a plurality of elongate flexible lip structures or lips arranged on and extending from the front surface of the base. Preferably, the lips of the plurality of lips are arranged in parallel, i.e. they are parallel adjacent to the base as well as at locations away from the base. Preferably, the lips of the plurality of lips have the same length, the length being measured radially between the base and the tip of the respective lip. The length of one or more lips is preferably within the range of 1 to 15 mm, more preferably within the range of 3 to 10 mm. Preferably, the lips of the plurality of lips form the same angle with the base at the same position along the closed loop trajectory. Preferably, the oblique angle between the parallel lips and the base of the lip seal is constant. According to preferred embodiments, the seal comprises at least two longitudinal portions / sections which extend over more than 0.5 cm, or more than 1 cm, or more than 2 cm, or more than 5 cm, along the closed loop trajectory, the seal portions having different seal direction, and comprises intermediate transition portions or sections. According to preferred embodiments the seal comprises 2, 3, 4, 5, 6 ,7 ,8, 9 or 10 longitudinal portions / sections which extend over more than 0.5 cm, or more than 1 cm, or more than 2 cm, or more than 5 cm, along the closed loop trajectory, and comprises intermediate transition portions or sections.

The base is preferably applied to, or injection molded to the filter element.

Apart from a filter media pack and a seal, the filter element can comprise one or two end cap structures and/or a shell structure and/or a seal support structure. A shell is known to the skilled person and can be provided to cover and protect the outer surface of the media pack, to a partial or full axial extent. One or both end cap structures and/or the shell are typically attached to the media pack in a sealing manner. One or both end cap structures and/or the shell can comprise a seal support structure. The shell can be integrated and unitary with at least one of the end caps. The seal can be applied to or at different portions of the filter element. For instance, the seal can be applied completely to one of the end caps of the filter element. Alternatively, the seal can be applied completely to the shell of the filter element. In preferred embodiments, the seal can be applied to the media pack of the filter element. In preferred embodiments, the seal can be applied to the media pack of the filter element and to one of the end caps. In preferred embodiments, the seal can be applied to the shell of the filter element and to one of the end caps.

Generally, a seal is preferably compressible or flexible in order to be able to adapt to a corresponding sealing surface. Generally, a support or reinforcement structure for a seal is preferably substantially rigid or non-deformable when exposed to forces occurring during manipulation and installation of the filter element in a corresponding housing. Generally, the support or reinforcement structure of a seal is substantially less deformable and rigid than the seal it supports.

In preferred embodiments, the material for forming the seal may be selected based on the desired Shore hardness of the resulting seal. In some embodiments, the seal has a Shore A value of at least 25, at least 30, at least 35, at least 40, at least 45, at least 50, at least 55, or at least 60. In some embodiments, the seal has a Shore A value of up to 40, up to 45, up to 50, up to 55, up to 60, up to 65, up to 70, up to 75, up to 80, up to 85, or up to 90. In an exemplary embodiment, the seal has a Shore A value in a range of 30 to 90. In another exemplary embodiment, the seal has a Shore A value in a range of 40 to 70. In yet another exemplary embodiment, the seal has a Shore A value in a range of 50 to 70. In some embodiments, the Shore A value is determined as described in ASTM D2240-15e1, entitled "Standard Test Method For Rubber Property- Durometer Hardness".

In some embodiments, the seal support or reinforcement structure has a Shore A value of at least 50, at least 60, at least 70, at least 80, or at least 90. In some embodiments, the seal support or reinforcement structure has a Shore A value of up to 80, up to 90, up to 95, or up to 100. In an exemplary embodiment, the seal support or reinforcement structure has a Shore A value in a range of 60 to 100. In another exemplary embodiment, the seal support or reinforcement structure has a Shore A value in a range of 70 to 100. In yet another exemplary embodiment, the seal support or reinforcement structure has a Shore A value in a range of 80 to 100. In some embodiments, the Shore A value is determined as described in ASTM D2240-15e1.

In some embodiments, the seal support or reinforcement structure has a Shore D value of at least 10, at least 15, at least 20, at least 25, or at least 30. In some embodiments, the seal support or reinforcement structure has a Shore D value of up to 80, up to 90, up to 95, or up to 100. In an exemplary embodiment, the seal support or reinforcement structure has a Shore D value in a range of 15 to 100. In another exemplary embodiment, the seal support or reinforcement structure has a Shore D value in a range of 30 to 100. In some embodiments, the Shore D value of the seal support or reinforcement structure is determined as described in ASTM D2240-15e1.

In a second aspect of the present disclosure, a filter assembly is disclosed comprising a housing and a filter element according to any of embodiments of the first aspect operably held within the housing, wherein the housing comprises a predetermined sealing surface for receiving the seal along the closed loop trajectory, the sealing surface being complementary to the seal having a non-constant predetermined sealing direction.

According to preferred embodiments, the distance between the predetermined sealing surface of the housing for receiving the seal along the closed loop trajectory and the smooth, continuous, band surface of the support structure that follows the seal is kept constant along the closed loop trajectory. This provided the advantage that the seal will exhibit the same amount of compression (for a polyurethane seal) or the same or about the same direction of deflection and amount of deflection (for a lip seal) along the closed loop trajectory, making the sealing connection between seal and housing wall more robust.

The predetermined sealing surface is preferably such that it can cooperate with the seal in order to separate a clean air area from a dirty air area within the housing.

According to preferred embodiments, the housing comprises an internal sealing surface which forms a continuous closed loop trajectory (i.e., it defines a single loop or band).

Features and advantages disclosed for one of the above aspects of the present disclosure are hereby also implicitly disclosed for the other aspects, mutatis mutandis, as the skilled person will recognize.

### Brief Description of the Drawings

The accompanying drawings, which are incorporated in and constitute a part of the description, illustrate several aspects of the present disclosure. A brief description of the drawings is as follows:
Fig. 1 is a perspective view of a first embodiment of the present disclosure.
Fig. 2 is a perspective view of a second embodiment of the present disclosure.
Fig. 3 is a perspective view of a third embodiment of the present disclosure.
Fig. 4 (a), (b), (c) and (d) are perspective views of fourth, fifth, sixth and seventh embodiments of the present disclosure.
Fig. 5, 6, 7 and 8 represent details of the embodiments of Fig. 4 (a), (b), (c) and (d) respectively.
Fig. 9 (a) (b) and (c) illustrate details of a preferred sealing configuration for preferred embodiments of the present disclosure.
Fig. 10 (a) and (b) illustrate the positioning of a filter element according to the third preferred embodiments of the present disclosure in an associated filter housing.

### Detailed Description of Preferred Embodiments

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

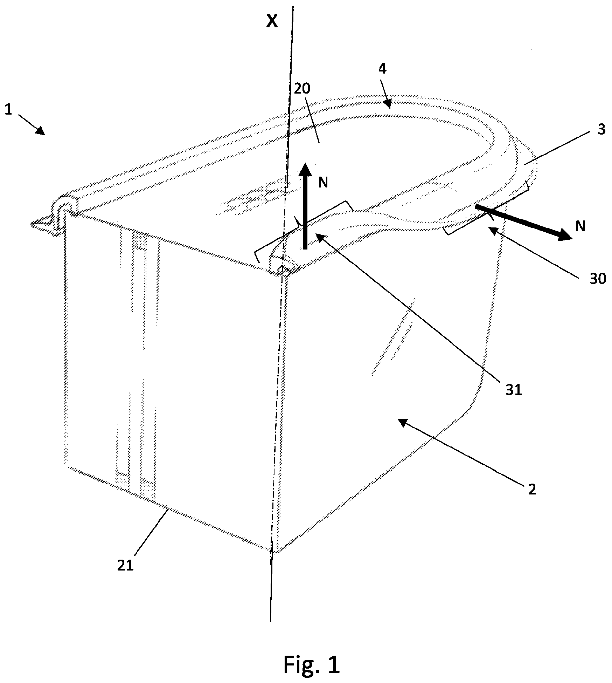

Fig. 1 illustrates a first preferred embodiment of the present disclosure. A filter element 1 comprises a media pack 2 of the fluted media or z-type. The media pack is of the wound type and comprises an obround cross-section perpendicular to its longitudinal axis. The longitudinal axis of the filter element 1 and the longitudinal axis of the media pack 2 coincide. The media pack/ filter element has an inflow face 20 and an outflow face 21 positioned at opposite sides of the media pack 2, being parallel to each other. At the inflow face, the filter element comprises a support structure 4 which is connected to the media pack 2 in a sealing manner. The support structure is embodied as a media support and seal support frame attached at an end of the media pack 2, for instance the outflow end. The support structure comprises an axially oriented circumferential outer surface and a radially oriented outer surface. A seal 3 is provided on the support structure 4, along a closed loop trajectory. The seal is circumferential to the longitudinal axis x of the media pack. The seal 3 is path-connected. The seal 3 defines a predetermined sealing direction with respect to the longitudinal axis x along the closed loop trajectory, which is not constant along the loop trajectory. In a first seal portion (longitudinal section) 31 along the loop trajectory, the sealing direction of the seal 3 is the axial direction. In a second seal portion (longitudinal section) 30 along the loop trajectory, the sealing direction of the seal 3 is the radial direction. In between the first seal portion and the second seal portion, the seal makes a smooth and continuous transition between the respective seal directions. Hereby each of those portions preferably extends over a length of the closed loop trajectory that is longer than 5% of the length of the loop trajectory.

Both portions have a length along the closed loop trajectory of more than 0.5 cm, more preferably more than 5 cm.

The first seal portion 31 along the loop trajectory is provided at an axial end of the media pack 2, i.e., on the axially oriented circumferential outer surface of the support structure 4.

The second seal 30 portion along the loop trajectory is provided at a radially outwardly oriented portion of the media pack 2, i.e., on the radially oriented outer surface. The transition portion in between the first portion 31 and the second portion 30 is also provided on the support structure 4.

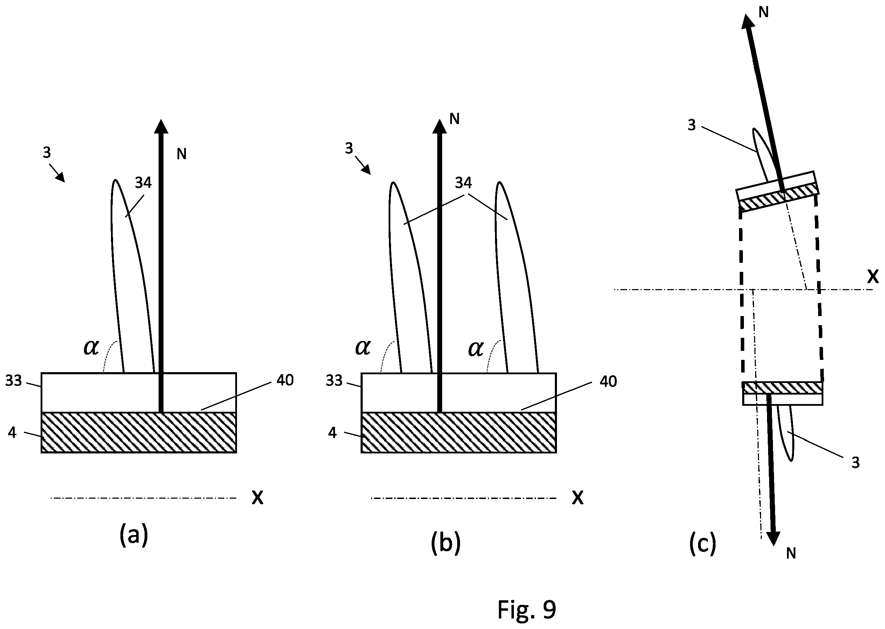

The seal 3 is a lip seal, aspects of which are illustrated in Figures 9 (a) to (c). A lip seal 3 comprises an elongate base 33, having a front and a back surface, and an elongate flexible lip structure or lip 34 extending from the front surface of the base 33. It comprises a T-shaped transversal cross-section. The base is planar in nature and makes an angle α with the lip 34. The angle α is preferably within the range of 45° to 90°. The support structure 4 comprises a smooth, continuous, band surface 40 that follows the seal 3, and the base 33 of the lip seal 3 is attached to the band surface 40 in a sealing manner. It is in direct contact with the band surface. The base 33 of the lip seal 3 is parallel to the smooth, continuous, band surface that follows it. The angle between the lip 34 and the band surface 40 corresponds to the angle α between the lip 34 and the base 33, the latter being substantially constant or constant. The sealing direction of the seal portions 30 and 31 are defined as parallel to the normal direction on their respective support surfaces, corresponding to respective sections or portions of the smooth, continuous, band surface 40 of the support structure 4. The sealing directions are different in the sense that the respective angles between the sealing direction and the axis x of the filter element are different (See e.g., also Fig. 9(c)).

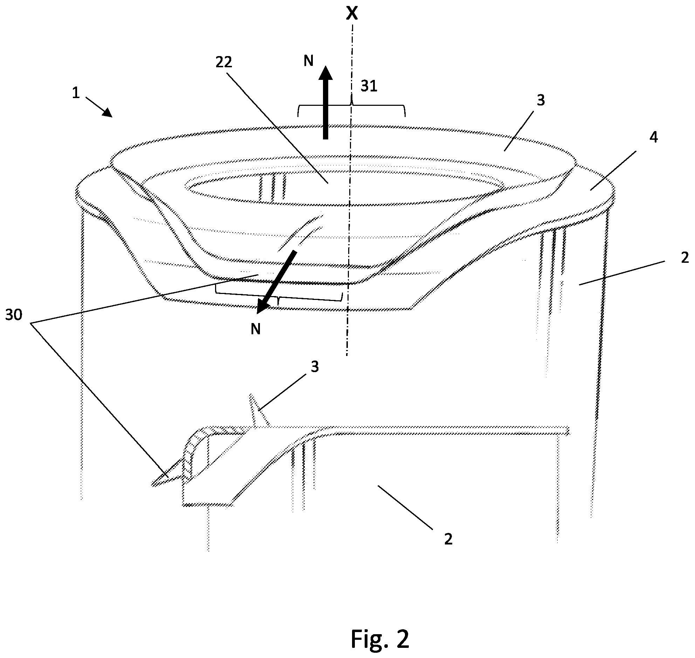

Fig. 2 illustrates a second preferred embodiment of the present disclosure. The upper portion of the Figure is a perspective view. The lower portion is side view with a cut-out section near the bend on the support structure/end cap 4 of the filter element.

The filter element 1 comprises a media pack 2 of the pleated type. A pleated media sheet is arranged in a tubular manner around a central opening 22 and defines a longitudinal axis. The longitudinal axis of the filter element 1 and the longitudinal axis of the media pack 2 coincide. The media pack/ filter element has an inflow face 20. On the opposed side of the media pack 2, a closed end cap structure 5 is provided. In use, the air flow passes through the inflow face 20 into the interior space 20 and is filtered by the media pack 2 defining the sidewall of the filter element 1, leaving the filter element 1 in a mainly radial direction.

At the inflow face, the filter element comprises a support structure 4 (open end cap) which is connected to the media pack 2 in a sealing manner. The support structure is embodied as a media support and seal support frame attached at an end of the media pack 2, for instance the inflow end. The support structure 4 comprises an axially oriented circumferential outer surface and a radially oriented outer surface. A seal 3 is provided on the support structure 4, along a closed loop trajectory. The seal is circumferential to the longitudinal axis x of the media pack 2. The seal 3 is path-connected. The seal 3 defines a predetermined sealing direction with respect to the longitudinal axis x along the closed loop trajectory, which is not constant along the loop trajectory. In a first seal portion (longitudinal section) 31 along the loop trajectory, the sealing direction of the seal 3 is the axial direction. In a second seal portion (longitudinal section) 30 along the loop trajectory, the sealing direction of the seal 3 is the radial direction. In between the first seal portion and the second seal portion, the seal makes a smooth and continuous transition between the respective seal directions. Hereby each of those seal portions preferably extends over a length of the closed loop trajectory that is longer than 5% of the length of the loop trajectory. Both portions have a length along the closed loop trajectory of more than 0.5 cm, more preferably more than 5 cm.

The first seal portion 31 along the loop trajectory is provided at an axial end of the media pack 2, i.e., on the axially oriented circumferential outer surface of the support structure 4.

The second seal 30 portion along the loop trajectory is provided at a radially outwardly oriented portion of the media pack 2, i.e., on the radially oriented outer surface. The transition portion in between the first portion 31 and the second portion 30 is also provided on the support structure 4.

In axial projection, the seal overlaps with the media pack for most of the closed loop trajectory. This applies to the seal portion 31. For a smaller portion, comprising the seal portion 30, the axial projection of the seal and the media pack do not overlap.

The seal 3 is a lip seal, similar as described for the first embodiments and in relation with Figures 9 (a) to (c). A lip seal 3 comprises an elongate base 33, having a front and a back surface, and an elongate flexible lip structure or lip 34 extending from the front surface of the base 33. It comprises a T-shaped transversal cross-section. The base is planar in nature and makes an angle α with the lip 34. The angle is preferably within the range of 45° to 90°. The support structure 4 comprises a smooth, continuous, band surface that follows the seal 3, and the base 33 of the lip seal 3 is attached to the band surface in a sealing manner. It is in direct contact with the band surface. The base 33 of the lip seal 3 is parallel to the smooth, continuous, band surface that follows it. The angle between the lip 34 and the band surface corresponds to the angle α between the lip 34 and the base 33, the latter being substantially constant or constant. The sealing direction of the seal portions 30 and 31 are defined as parallel to the normal direction on their respective support surfaces, corresponding to respective sections or portions of the smooth, continuous, band surface of the support structure 4. The sealing directions are different in the sense that the respective angles between the sealing direction and the axis x of the filter element 2 are different.

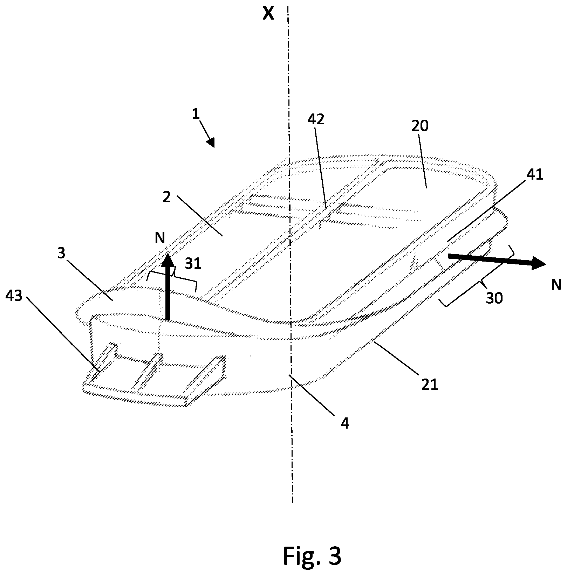

Fig. 3 illustrates a third preferred embodiment of the present disclosure.

The filter element 1 comprises a media pack 2 of the pleated panel type. A pleated media sheet 2 is embedded in a media and seal support frame 4 surrounding it, in a sealing or airtight manner. The seal support frame may for instance comprise reinforcement ribs 42 for the frame and/or media.

The filter element defines a central axis perpendicular on the filter frame/media pack. The axis of the filter element 1 and the axis of the media pack 2 coincide. The media pack/ filter element has opposed inflow and outflow faces 20, 21, which are parallel.

The support structure or frame 4 comprises an axially oriented circumferential outer surface and a radially oriented outer surface, corresponding to an axial and radial surface of the media pack respectively. On the radially oriented surface of the frame 4, a tab/protrusion 43 is provided which is suitable for acting as a positioning means or pivot point for the filter element 1 by a suitable interaction with a housing. A seal 3 is provided on the support structure 4, along a closed loop trajectory. The seal is circumferential to the longitudinal axis x of the media pack 2. The seal 3 is path-connected. The seal 3 defines a predetermined sealing direction with respect to the longitudinal axis x along the closed loop trajectory, which is not constant along the loop trajectory. In a first seal portion (longitudinal section) 31 along the loop trajectory, the sealing direction of the seal 3 is the axial direction. In a second seal portion (longitudinal section) 30 along the loop trajectory, the sealing direction of the seal 3 is the radial direction. In between the first seal portion and the second seal portion, the seal makes a smooth and continuous transition between the respective seal directions. Hereby each of those portions preferably extends over a length of the closed loop trajectory that is longer than 5% of the length of the loop trajectory. Both portions have a length along the closed loop trajectory of more than 0.5 cm, more preferably more than 5 cm.

The first seal portion 31 along the loop trajectory is provided at an axial end of the media pack 2, i.e., on the axially oriented circumferential outer surface of the support structure 4.

The second seal 30 portion along the loop trajectory is provided at a radially outwardly oriented portion of the media pack 2, i.e., on the radially oriented outer surface. The transition portion in between the first portion 31 and the second portion 30 is also provided on the support structure 4.

In axial projection, the seal does not overlap with the media pack for most of the closed loop trajectory, except for a portion near the pivot structure 43.

It is an advantage that a seal 3 can be applied on a filter element close to but not at the position of the tab/protrusion 43 of the frame 4, which still effectively seals against a respective filter housing inner sidewall.

The seal 3 is a lip seal, similar as described for the first embodiments and in relation with Figures 9 (a) to (c). A lip seal 3 comprises an elongate base 33, having a front and a back surface, and an elongate flexible lip structure or lip 34 extending from the front surface of the base 33. It comprises a T-shaped transversal cross-section. The base is planar in nature and makes an angle α with the lip 34. The angle is preferably within the range of 45° to 90°. The support structure 4 comprises a smooth, continuous, band surface that follows the seal 3, and the base 33 of the lip seal 3 is attached to the band surface in a sealing manner. It is in direct contact with the band surface. The base 33 of the lip seal 3 is parallel to the smooth, continuous, band surface that follows it. The angle between the lip 34 and the band surface corresponds to the angle α between the lip 34 and the base 33, the latter being substantially constant or constant. The sealing direction of the seal portions 30 and 31 are defined as parallel to the normal direction on their respective support surfaces, corresponding to respective sections or portions of the smooth, continuous, band surface 40 of the support structure 4. The sealing directions are different in the sense that the respective angles between the sealing direction and the axis x of the filter element 2 are different.

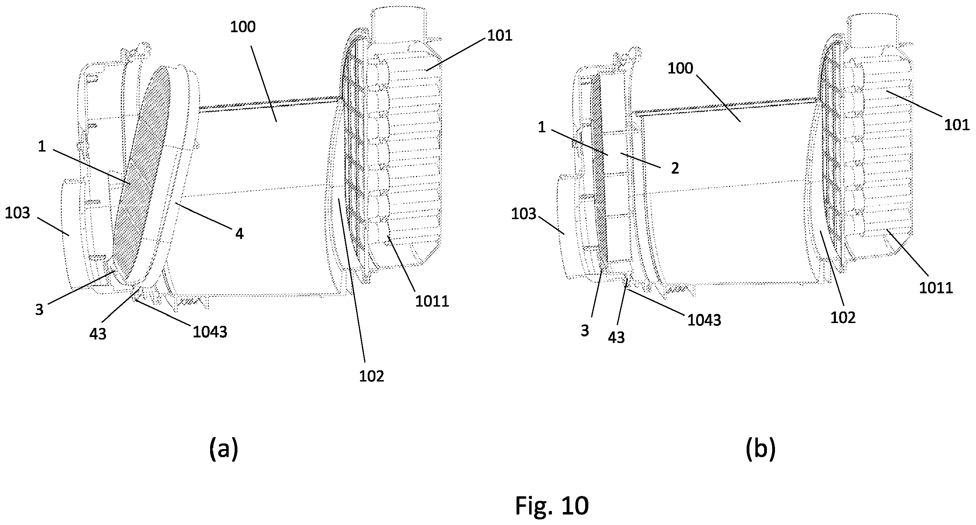

Fig. 10 (a) and (b) illustrate the interaction of a filter element according to the third preferred embodiment with a corresponding filter housing 100. Fig. 10 (a) is a cut perspective view of the housing 100 with a perspective view of the filter element 1 during installation. Fig. 10 (b) is a cut perspective view of both filter element 1 and housing 100 in a final installation state of the filter element 1. The filter housing 100 is of the side-load type and is adapted for receiving both a safety filter element as well as a main filter element. It comprises an access opening and a cover (not depicted) for closing off the access opening. The safety filter element corresponds to the filter element of the third preferred embodiment. The housing has an inlet 102 and an outlet 103, typically positioned at opposite ends of the filter housing 100. The filter housing optionally has a precleaner arrangement 101 arranged upstream of the inlet 102, known in the art and typically comprising a set of swirl generation means and associated dust separator tubes 1011. The housing sidewall comprises a recess 1043 arranged and adapted for receiving the tab/protrusion 43 of the frame 4, such that the filter element 1 can then pivot about the tab 43 in the recess 1043 into a final position near the outlet 103, whereby the circumferential seal 3 seals the filter element 1 against the inner wall of the housing 100. The presence of the axial seal portion on the upper surface of the filter element 1, and the transition portion towards the radial seal portion further on, allows for a compact arrangement of the filter assembly (100,1), as the position of the seal in the final position is not jeopardized by the pivoting movement or presence of the tab 43.

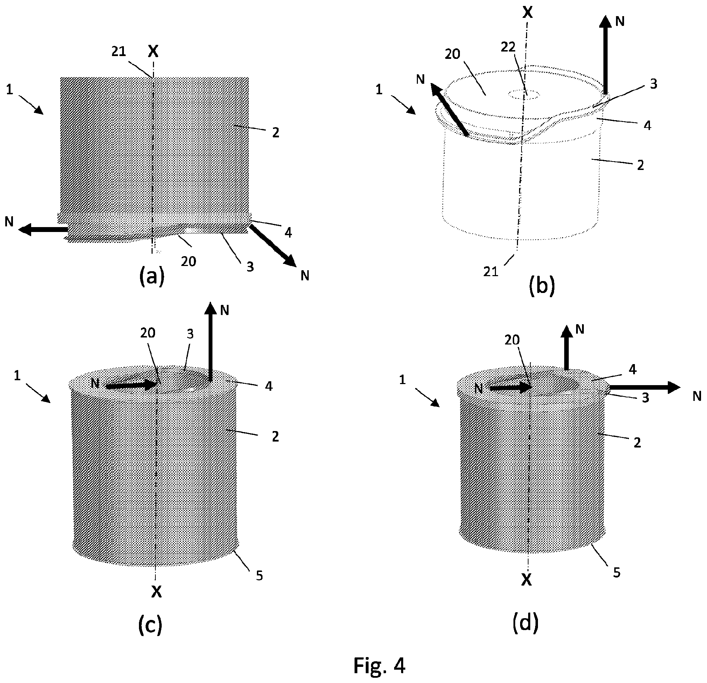

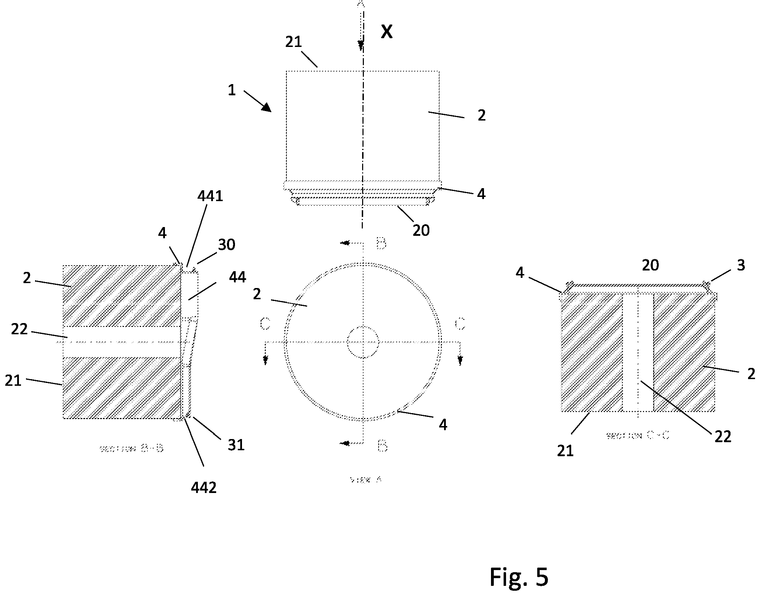

Figures 4 (a) to (d) illustrate fourth, fifth, sixth and seventh embodiments of the present disclosure which comprise a first seal portion and a second seal portion that have different sealing direction, details of which are depicted in Fig. 5 to 8 respectively. Also in each of these embodiments, in between the first seal portion and the second seal portion, the seal (or seal direction) makes a smooth and continuous transition between the respective seal directions of the first and second seal portions.

More generally, for all embodiments of the present disclosure, it is an advantage that a seal can be provided on a filter element for fitting a predetermined housing, while somehow "bypassing" pivot structures, reinforcement ribs, flow guiding features, or any other obstacles present on the filter element or on an associated filter housing.

Fig. 4(a) and 5 illustrate a fourth preferred embodiment of the present disclosure. A filter element 1 comprises a media pack 2 of the fluted media or z-type. The media pack is of the wound type and comprises a circular cross-section perpendicular to its longitudinal axis. It comprises a closed center core 22. The longitudinal axis of the filter element 1 and the longitudinal axis of the media pack 2 coincide.

The media pack/ filter element has an inflow face 20 and an outflow face 21 positioned at opposite sides of the media pack 2, being parallel to each other. At the inflow face, the filter element comprises an endcap which serves as a support structure 4 which is connected to the media pack 2 in a sealing manner. The support structure 4 is embodied as an open media support and seal support frame attached at an end of the media pack 2, for instance the outflow end.

The support structure 4 comprises a collar 44 in the form of a hollow tube extending away from the filter element in an axial direction.

The collar comprises an axial step. On a first radial position of the collar the collar extends axially further away from the flow face 20 of the filter element 1 than on a second, opposed radial position. The collar comprises a portion 441 which is parallel to the axis of the filter element at the first radial position. The collar comprises a chamfered portion 442 which is inclined with respect to the axis of the filter element at the second radial position.

A seal 3 is provided on the collar structure 44, along a closed loop trajectory comprising the first radial and second radial positions of the collar. The seal is circumferential to the longitudinal axis x of the media pack. The seal 3 is path-connected. The seal 3 defines a predetermined sealing direction with respect to the longitudinal axis x along the closed loop trajectory, which is not constant along the loop trajectory.

In a first seal portion (longitudinal section) 31 along the loop trajectory, corresponding to the chamfered collar portion 442, the sealing direction of the seal 3 is a direction of 45° with respect to both the radial and axial directions.

In a second seal portion (longitudinal section) 30 along the loop trajectory, corresponding to the collar portion 441, the sealing direction of the seal 3 is the radially outward direction. In between the first seal portion and the second seal portion, the seal makes a smooth and continuous transition between the respective seal directions, on the collar 44. Hereby each of those seal portions preferably extends over a length of the closed loop trajectory that is longer than 5% of the length of the closed loop trajectory. Both seal portions have a length along the closed loop trajectory of more than 0.5 cm, more preferably more than 5 cm.

Both the first and the second seal portions 30 and 31 are provided at an axial end of the media pack 2.

The seal 3 is a lip seal, aspects of which are illustrated in Figures 9 (a) to (c). A lip seal 3 comprises an elongate base 33, having a front and a back surface, and an elongate flexible lip structure or lip 34 extending from the front surface of the base 33. It comprises a T-shaped transversal cross-section. The base is planar in nature and makes an angle α with the lip 34. The angle α is preferably within the range of 45° to 90°. The support structure 4 comprises a smooth, continuous, band surface 40 that follows the seal 3, and the base 33 of the lip seal 3 is attached to the band surface 40 in a sealing manner. It is in direct contact with the band surface 40. The base 33 of the lip seal 3 is parallel to the smooth, continuous, band surface 40 that follows it. The angle between the lip 34 and the band surface 40 corresponds to the angle α between the lip 34 and the base 33, the latter being substantially constant or constant. The sealing direction of the seal portions 30 and 31 are defined as parallel to the normal direction on their respective support surfaces, corresponding to respective sections or portions of the smooth, continuous, band surface 40 of the support structure 4. The sealing directions are different in the sense that the respective angles between the sealing direction and the axis x of the filter element are different.

In axial projection, the seal 3 does completely overlap with the media pack 2, i.e., the axial projection of the seal 3 lies within the axial projection of the media pack 2.

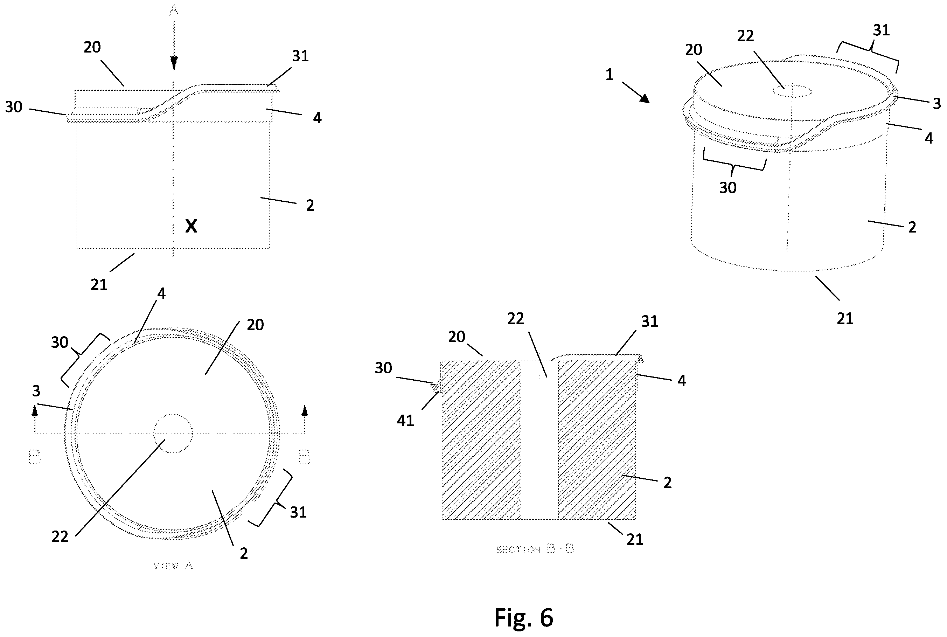

Fig. 4(b) and 6 illustrate a fifth preferred embodiment of the present disclosure. A filter element 1 comprises a media pack 2 of the fluted media or z-type. The media pack is of the wound type and comprises a circular cross-section perpendicular to its longitudinal axis. It comprises a closed center core 22. The longitudinal axis of the filter element 1 and the longitudinal axis of the media pack 2 coincide.

The media pack/ filter element has an inflow face 20 and an outflow face 21 positioned at opposite sides of the media pack 2, being parallel to each other. At the inflow face, the filter element comprises an endcap which serves as a support structure 4 which is connected to the media pack 2 in a sealing manner. The support structure 4 is embodied as an open media support and seal support frame attached at an end of the media pack 2, for instance the outflow end.

The support structure 4 comprises a cylindrical shell covering the sidewall of the media pack close to adjacent and abutting the flow face 20. The shell has a limited axial extent but can alternatively cover the whole sidewall of the media pack 2, to which it is attached in a sealing manner. The support structure 4 further comprises a radially extending flange abutting the flow face 20, having a surface being flat with the flow face 20, perpendicular to the axial direction. The flange can for instance extend radially over an angular region of about 180°. On a side opposite to the flange, the support structure comprises a chamfered surface extending away from the cylindrical base of the shell under an oblique angle, over a complementary angular region. An axial step exists between the flange and the chamfered surface. A smooth transition structure is provided between the flange and the chamfered structure on the cylindrical base of the shell, in order to define a smooth, continuous, circumferential band surface 40 for the support structure 4.

A seal 3 is attached to the band surface 40, along a closed loop trajectory, in a sealing manner. The seal 3 is path-connected. The seal 3 defines a predetermined sealing direction with respect to the longitudinal axis x along the closed loop trajectory, which is not constant along the loop trajectory.

In a first seal portion (longitudinal section) 31 along the loop trajectory positioned on the flange, the sealing direction of the seal 3 is the axial direction.

In a second seal portion (longitudinal section) 30 along the loop trajectory positioned on the chamfered surface, the sealing direction of the seal 3 is along the normal direction on the chamfered surface, which is not purely axial and predominantly radial in nature.

Hereby each of those portions preferably extends over a length of the closed loop trajectory that is longer than 5% of the length of the loop trajectory. Both seal portions have a length along the closed loop trajectory of more than 0.5 cm, more preferably more than 5 cm.

The seal 3 is a lip seal, aspects of which are illustrated in Figures 9 (a) to (c) and are identical to those explained for the previous preferred embodiments. The sealing direction of the seal portions 30 and 31 are defined as parallel to the normal direction on their respective support surfaces, corresponding to respective sections or portions of the smooth, continuous, band surface 40 of the support structure 4. The sealing directions are different in the sense that the respective angles between the sealing direction and the axis x of the filter element are different.

In axial projection, there is no overlap between the seal 3 and the media pack, i.e., the axial projection of the seal 3 and the axial projection of the media pack 2 are disjunct.

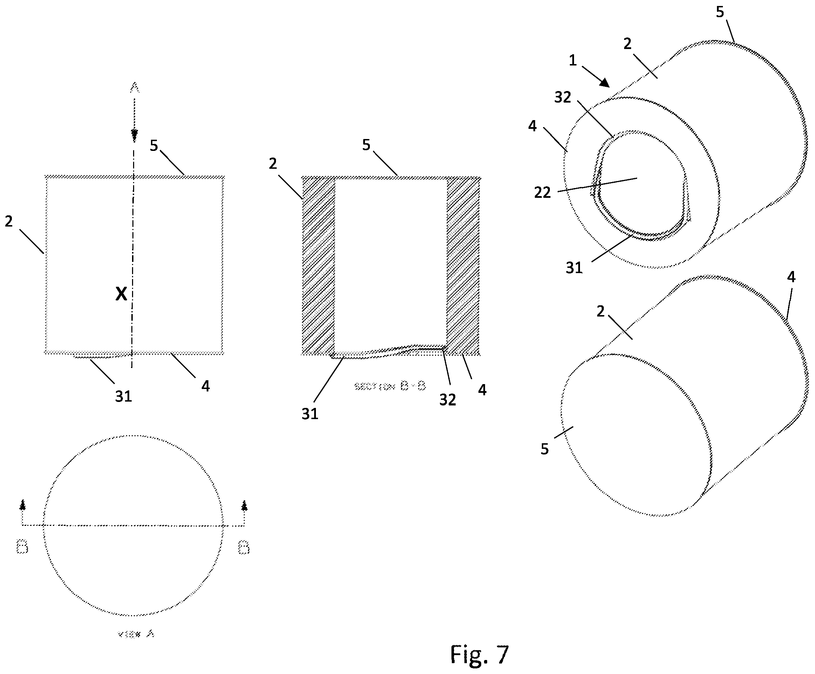

Fig. 4(c) and 7 illustrate a sixth preferred embodiment of the present disclosure.

The filter element 1 comprises a media pack 2 of the pleated type. A pleated media sheet is arranged in a tubular manner around a central opening 22 and defines a longitudinal axis. The longitudinal axis x of the filter element 1 and the longitudinal axis of the media pack 2 coincide. The media pack/ filter element has an inflow face 20. On the opposed side of the media pack 2, a closed end cap structure 5 is provided. In use, the air flow passes through the inflow face 20 into the interior space 20 and is filtered by the media pack 2 defining the sidewall of the filter element 1, leaving the filter element 1 in a mainly radial direction.

At the inflow face 20, the filter element comprises a support structure 4 (or open end cap) which is connected to the media pack 2 in a sealing manner. The support structure is embodied as a media support and seal support frame attached at an end of the media pack 2, for instance the inflow end, in a sealing manner.

The endcap 4 comprises an axial ring structure parallel with the associated axial end surface of the media pack, and an inner cylindrical rim adjacent to the inner sidewall of the media pack 2, extending from the inner boundary of the ring structure towards the filter media in the axial direction, e.g., for at least 0.5 cm or at least 1 cm or at least 3 cm. The end cap is attached to the end surface of the media pack in a sealing manner.

A seal 3 is provided on the support structure 4, along a closed loop trajectory. The seal is circumferential to the longitudinal axis x of the media pack 2. The seal 3 is path-connected. The seal 3 defines a predetermined sealing direction with respect to the longitudinal axis x along the closed loop trajectory, which is not constant along the loop trajectory. In a first seal portion (longitudinal section) 31 along the loop trajectory, arranged outwardly on the axial ring structure, the sealing direction of the seal 3 is the axial direction. In a second seal portion (longitudinal section) 32 along the loop trajectory, arranged inwardly on the inner cylindrical rim, the sealing direction of the seal 3 is the radially inward direction. In between the first seal portion and the second seal portion, the seal makes a smooth and continuous transition between the respective seal directions. Both seal portions have a length along the closed loop trajectory of more than 0.5 cm, more preferably more than 5 cm. Hereby each of those seal portions preferably extends over a length of the closed loop trajectory that is longer than 5% of the length of the closed loop trajectory.

The first seal portion 31 along the loop trajectory is provided at an axial end of the media pack 2.

The second seal portion 32 along the loop trajectory is provided at a radially inwardly oriented portion of the media pack 2, i.e., on the inner cylindrical rim. The transition portion in between the first seal portion 31 and the second seal portion 32 is also provided on the support structure 4.

The seal 3 is a lip seal, similar as described for the first embodiments and in relation with Figures 9 (a) to (c) and are identical to those explained for the previous preferred embodiments. The sealing direction of the seal portions 30 and 31 are defined as parallel to the normal direction on their respective support surfaces, corresponding to respective sections or portions of the smooth, continuous, band surface 40 of the support structure 4. The sealing directions are different in the sense that the respective angles between the sealing direction and the axis x of the filter element are different.

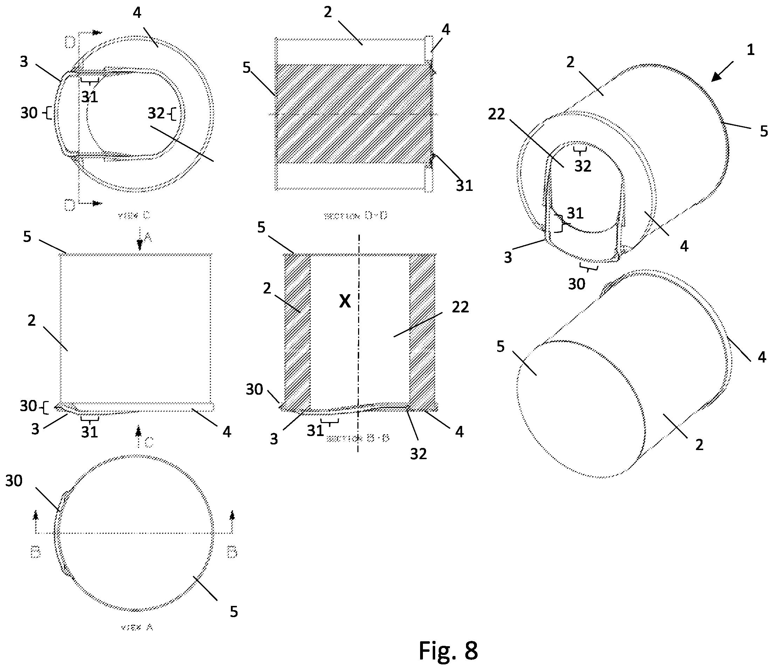

Fig. 4(d) and 8 illustrate a seventh preferred embodiment of the present disclosure.

The seventh preferred embodiment is similar to the sixth preferred embodiments but differs therefrom in that the endcap 4 comprises an axial ring structure parallel with the associated axial end surface of the media pack 2, and an inner and outer cylindrical rim adjacent to the inner and outer sidewalls of the media pack 2 respectively, extending from the inner and outer boundaries respectively of the ring structure in the axial direction towards the filter media. For instance, the end cap can define an annular volume for receiving an end of the pleated tubular media pack 2 and for instance a potting material for attaching the media to the end cap 4 in a sealing manner. This embodiment comprises a first, a second and a third seal portion (longitudinal sections) along the closed loop trajectory that have different sealing directions. It also comprises a first seal portion 32 having a sealing direction which is radially inward and a second seal portion 30 having a sealing direction which is radially outward.

A seal 3 is provided on the support structure 4, along a closed loop trajectory. The seal is circumferential to the longitudinal axis x of the media pack 2. The seal 3 is path-connected. The seal 3 defines a predetermined sealing direction with respect to the longitudinal axis x along the closed loop trajectory, which is not constant along the loop trajectory. In a first seal portion (longitudinal section) 31 along the loop trajectory, arranged outwardly on the axial ring structure, the sealing direction of the seal 3 is the axial direction. In a second seal portion (longitudinal section) 32 along the loop trajectory, arranged inwardly on the inner cylindrical rim, the sealing direction of the seal 3 is the radially inward direction. In a third seal portion (longitudinal section) 30 along the loop trajectory, arranged outwardly on the outer cylindrical rim, the sealing direction of the seal 3 is the radially outward direction. At least two or all three seal portions have a length along the closed loop trajectory of more than 0.5 cm, more preferably more than 5 cm. Hereby each of those seal portions preferably extends over a length of the closed loop trajectory that is longer than 5% of the length of the loop trajectory.

In between the first seal portion 31, the second seal portion 32 and the third seal portion 30, the seal 3 makes a smooth and continuous transition between the respective seal directions by means of respective transition portions.

The first seal portion 31 along the loop trajectory is provided at an axial end of the media pack 2.

The second seal portion 32 along the loop trajectory is provided at a radially inwardly oriented portion of the media pack 2, i.e., on the inner cylindrical rim.

The transition portions are also provided on the support structure 4. The third seal portion 30 along the loop trajectory is provided at a radially outwardly oriented portion of the media pack 2, i.e., on the outer cylindrical rim.

The seal 3 is a lip seal, similar as described for the first embodiments and in relation with Figures 9 (a) to (c) and are identical to those explained for the previous preferred embodiments. The sealing direction of the seal portions 30, 31 and 32 are defined as parallel to the normal direction on their respective support surfaces, corresponding to respective sections or portions of the smooth, continuous, band surface 40 of the support structure 4. The sealing directions are different in the sense that the respective angles between the sealing direction and the axis x of the filter element are different.

Figure 9 (a) illustrates the features of a lip seal 3 as can be used in any of the preferred embodiments of the present disclosure. A lip seal 3 comprises an elongate base 33, having a front and a back surface, and an elongate flexible lip structure or lip 34 extending from the front surface of the base 33. It comprises a generally T-shaped transversal cross-section. The base is planar in nature and makes an angle α with the lip 34. The angle α is preferably within the range of 45° to 90°. The support structure 4 comprises a smooth, continuous, band surface 40 that follows the seal 3, and the base 33 of the lip seal 3 is attached to the band surface 40 in a sealing manner. It is in direct contact with the band surface 40. The base 33 of the lip seal 3 is parallel to the smooth, continuous, band surface 40 that follows it. Figure 9 (b) illustrates the features of a similar lip seal 3 as can be used in any of the preferred embodiments of the present disclosure, comprising 2 parallel lips 34 extending from the base 33. Alternatively, even more parallel lips 34 can be provided, such as e.g. 3, 4 or more lips 34.

Figure 9 (c) illustrates a cross section of a seal 3 which extends along a closed loop trajectory, having two portions with different sealing directions, the sealing directions being defined by the direction of the normal on the corresponding support portions. The two normal vectors make different angles with the axis x of the filter element.

It will be appreciated by the skilled person that according to the disclosure, and for all of the disclosed embodiments, in at least one seal portion, for instance one of the at least two seal portions with different seal direction, the seal direction is not parallel with an outer wall of the filter element or media pack, the respective outer walls comprising a sidewall, upper wall or lower wall of the filter element or media pack. For instance, in at least one seal portion, the seal direction is not parallel with a sidewall of the filter element or media pack.

It will also be appreciated by the skilled person that according to the disclosure, and for all of the disclosed embodiments, in at least one seal portion, the seal direction is not parallel (and preferably not perpendicular) with a corresponding and adjacent portion of the sidewall of the filter element or of the filter media pack.

It will also be appreciated by the skilled person that according to the disclosure, and for all of the disclosed embodiments, in at least one seal portion, the seal direction lies in a plane that intersects the longitudinal axis of the filter element. In another view, any plane which comprises or is oriented along that seal direction intersects the longitudinal axis of the filter element. This application is intended to cover adaptations or variations of the present subject matter. It is to be understood that the above description is intended to be illustrative, and not restrictive.

## Claims

1. A filter element (1) comprising a media pack (2) and a seal (3), the seal (3) being directly or indirectly connected to the media pack (2) in a sealing manner, the filter element (1) comprising a longitudinal axis,
wherein the seal (3) extends along a closed loop trajectory; and
wherein the seal (3) defines a predetermined sealing direction with respect to the longitudinal axis along the closed loop trajectory;
wherein the predetermined sealing direction is not constant along the loop trajectory; and **characterized in that**,
in at least one seal portion, the seal direction is not parallel with a sidewall, upper wall or lower wall of the filter element or media pack.

2. A filter element according to claim 1, wherein the seal (3) is a path-connected structure.

3. A filter element according to any of the previous claims, wherein the seal (3) is at least partially circumferential to the media pack (2).

4. A filter element according to any of the previous claims, further comprising a support structure (4) attached to the media pack (2) in a sealing manner, wherein the seal (3) is at least partially (or completely) supported by the support structure (4).

5. A filter element according to claim 4, wherein the support structure comprises a smooth, continuous, band surface that follows the seal, the band surface preferably corresponding to the closed loop trajectory of the seal, such that for each section or portion of the seal, there is a corresponding portion of the band surface supporting it.

6. A filter element according to claim 5, wherein the band surface comprises a first portion and a different second portion along the closed loop trajectory (longitudinal sections), defining a first and a second normal direction respectively, the angle between the first normal direction and the axial direction of the filter element is different from the angle between the second normal direction and the axial direction of the filter element.

7. A filter element according to any of the previous claims, comprising a first seal portion (30) along the loop trajectory wherein the predetermined sealing direction is radially outward from the longitudinal axis and a second seal portion (31) along the loop trajectory wherein the predetermined sealing direction is axial, i.e., in a direction which corresponds to the longitudinal axis.

8. A filter element according to any of the previous claims, comprising a first seal portion (32) along the loop trajectory wherein the predetermined sealing direction is radially inward towards the longitudinal axis and a second seal portion (31) along the loop trajectory wherein the predetermined sealing direction is axial, i.e., in a direction which corresponds to the longitudinal axis.

9. A filter element according to any of the previous claims, comprising a first seal portion (30) along the loop trajectory wherein the predetermined sealing direction is radially outward from the longitudinal axis and a second seal portion (32) along the loop trajectory wherein the predetermined sealing direction is radially inward towards the longitudinal axis.

10. A filter element according to any of the previous claims, wherein a first seal portion or the first seal portion (30,31,32) along the loop trajectory is provided at an axial end of the media pack (2) and wherein a second seal portion or the second seal (30,31,32) portion along the loop trajectory is provided at a radially outwardly oriented portion of the media pack (2).

11. A filter element according to any of the previous claims, wherein a first seal portion or the first seal portion (30,31,32) along the loop trajectory is provided at an axial end of the media pack (2) and wherein a second seal portion or the second seal portion (30,31,32) along the loop trajectory is provided at the axial end of the media pack (2).

12. A filter element according to any of the previous claims, wherein a first seal portion or the first seal portion (30,31,32) along the loop trajectory is provided at a radially outwardly oriented portion of the media pack (2) and wherein a second seal portion or the second loop trajectory portion (30,31,32) of the loop trajectory is provided at the radially outwardly oriented portion of the media pack (2).

13. A filter element according to any of the previous claims, wherein a first seal portion or the first seal portion and a second seal portion or the second seal (3) portion extend over a length of the closed loop trajectory that is longer than 5% of the length of the closed loop trajectory.

14. A filter element according to any of the previous claims, wherein the seal (3) makes a smooth and continuous transition between respective seal directions of a first and a second seal portion.

15. A filter element according to any of the previous claims, wherein the seal (3) comprises a lip seal comprising a base and one or more lips (3) extending from said base.

## Patentansprüche

1. Filterelement (1), das ein Medienpaket (2) und eine Dichtung (3) umfasst, wobei die Dichtung (3) direkt oder indirekt auf eine abdichtende Weise mit dem Medienpaket (2) verbunden ist, wobei das Filterelement (1) eine Längsachse umfasst:
wobei sich die Dichtung (3) entlang einer geschlossenen Schleifenbahn erstreckt und
wobei die Dichtung (3) eine vorbestimmte Abdichtungsrichtung in Bezug auf die Längsachse entlang der geschlossenen Schleifenbahn definiert,
wobei die vorbestimmte Abdichtungsrichtung entlang der Schleifenbahn nicht konstant ist, und **dadurch gekennzeichnet, dass**,
in mindestens einem Dichtungsabschnitt, die Abdichtungsrichtung nicht parallel zu einer Seitenwand, oberen Wand oder unteren Wand des Filterelements oder des Medienpakets ist.

2. Filterelement nach Anspruch 1, wobei die Dichtung (3) eine bahnverbundene Struktur ist.

3. Filterelement nach einem der vorhergehenden Ansprüche, wobei die Dichtung (3) zumindest teilweise umlaufend zu dem Medienpaket (2) ist.

4. Filterelement nach einem der vorhergehenden Ansprüche, das ferner eine Tragstruktur (4) umfasst, die auf eine abdichtende Weise an dem Medienpaket (2) befestigt ist, wobei die Dichtung (3) zumindest teilweise (oder vollständig) durch die Tragstruktur (4) getragen wird.

5. Filterelement nach Anspruch 4, wobei die Tragstruktur eine glatte, durchgehende Bandoberfläche umfasst, die der Dichtung folgt, wobei die Bandoberfläche vorzugsweise der geschlossenen Schleifenbahn der Dichtung entspricht, so dass es für jede(n) Sektion oder Abschnitt der Dichtung einen entsprechenden Abschnitt der Bandoberfläche gibt, der sie/ihn trägt.

6. Filterelement nach Anspruch 5, wobei die Bandoberfläche einen ersten Abschnitt und einen verschiedenen zweiten Abschnitt entlang der geschlossenen Schleifenbahn (Längssektionen) umfasst, die jeweils eine erste beziehungsweise eine zweite senkrechte Richtung definieren, wobei sich der Winkel zwischen der ersten senkrechten Richtung und der Axialrichtung des Filterelements von dem Winkel zwischen der zweiten senkrechten Richtung und der Axialrichtung des Filterelements unterscheidet.

7. Filterelement nach einem der vorhergehenden Ansprüche, das einen ersten Dichtungsabschnitt (30) entlang der Schleifenbahn, wobei die vorbestimmte Abdichtungsrichtung von der Längsachse in Radialrichtung nach außen verläuft, und einen zweiten Dichtungsabschnitt (31) entlang der Schleifenbahn, wobei die vorbestimmte Abdichtungsrichtung axial verläuft, d. h., in einer Richtung, die der Längsachse entspricht, umfasst.

8. Filterelement nach einem der vorhergehenden Ansprüche, das einen ersten Dichtungsabschnitt (32) entlang der Schleifenbahn, wobei die vorbestimmte Abdichtungsrichtung zu der Längsachse hin in Radialrichtung nach innen verläuft, und einen zweiten Dichtungsabschnitt (31) entlang der Schleifenbahn, wobei die vorbestimmte Abdichtungsrichtung axial verläuft, d. h., in einer Richtung, die der Längsachse entspricht, umfasst.

9. Filterelement nach einem der vorhergehenden Ansprüche, das einen ersten Dichtungsabschnitt (30) entlang der Schleifenbahn, wobei die vorbestimmte Abdichtungsrichtung von der Längsachse in Radialrichtung nach außen verläuft, und einen zweiten Dichtungsabschnitt (32) entlang der Schleifenbahn, wobei die vorbestimmte Abdichtungsrichtung zu der Längsachse hin in Radialrichtung nach innen verläuft, umfasst.

10. Filterelement nach einem der vorhergehenden Ansprüche, wobei ein erster Dichtungsabschnitt oder der erste Dichtungsabschnitt (30, 31, 32) entlang der Schleifenbahn an einem axialen Ende des Medienpakets (2) bereitgestellt wird und wobei ein zweiter Dichtungsabschnitt oder der zweite Dichtungs- (30, 31, 32) abschnitt entlang der Schleifenbahn an einem in Radialrichtung nach außen ausgerichteten Abschnitt des Medienpakets (2) bereitgestellt wird.

11. Filterelement nach einem der vorhergehenden Ansprüche, wobei ein erster Dichtungsabschnitt oder der erste Dichtungsabschnitt (30, 31, 32) entlang der Schleifenbahn an einem axialen Ende des Medienpakets (2) bereitgestellt wird und wobei ein zweiter Dichtungsabschnitt oder der zweite Dichtungsabschnitt (30, 31, 32) entlang der Schleifenbahn an dem axialen Ende des Medienpakets (2) bereitgestellt wird.

12. Filterelement nach einem der vorhergehenden Ansprüche, wobei ein erster Dichtungsabschnitt oder der erste Dichtungsabschnitt (30, 31, 32) entlang der Schleifenbahn an einem in Radialrichtung nach außen ausgerichteten Abschnitt des Medienpakets (2) bereitgestellt wird und wobei ein zweiter Dichtungsabschnitt oder der zweite Dichtungsabschnitt (30, 31, 32) der Schleifenbahn an dem in Radialrichtung nach außen ausgerichteten Abschnitt des Medienpakets (2) bereitgestellt wird.

13. Filterelement nach einem der vorhergehenden Ansprüche, wobei sich ein erster Dichtungsabschnitt oder der erste Dichtungsabschnitt und ein zweiter Dichtungsabschnitt oder der zweite Dichtungs- (3) abschnitt über eine Länge der geschlossenen Schleifenbahn erstrecken, die länger ist als 5 % der Länge der geschlossenen Schleifenbahn.

14. Filterelement nach einem der vorhergehenden Ansprüche, wobei die Dichtung (3) einen glatten und durchgehenden Übergang zwischen jeweiligen Dichtungssektionen eines ersten und eines zweiten Dichtungsabschnitts herstellt.

15. Filterelement nach einem der vorhergehenden Ansprüche, wobei die Dichtung (3) eine Lippendichtung umfasst, die eine Basis und eine oder mehrere Lippen (3), die sich von der Basis aus erstrecken, umfasst.

## Revendications

1. Élément formant filtre (1) comprenant un bloc de milieu filtrant (2) et un joint (3), le joint (3) étant directement ou indirectement relié au bloc de milieu filtrant (2) de manière étanche, l'élément formant filtre (1) comprenant un axe longitudinal,
dans lequel le joint (3) s'étend le long d'une trajectoire en boucle fermée ; et
dans lequel le joint (3) définit une direction d'étanchéité prédéterminée par rapport à l'axe longitudinal le long de la trajectoire en boucle fermée ;
dans lequel la direction d'étanchéité prédéterminée n'est pas constante le long de la trajectoire en boucle ; et **caractérisé en ce que**,
dans au moins une portion de joint, la direction de joint n'est pas parallèle à une paroi latérale, une paroi supérieure ou une paroi inférieure de l'élément formant filtre ou du bloc de milieu filtrant.

2. Élément formant filtre selon la revendication 1, dans lequel le joint (3) est une structure connexe par arcs.

3. Élément formant filtre selon l'une quelconque des revendications précédentes, dans lequel le joint (3) est au moins partiellement circonférentiel au bloc de milieu filtrant (2).

4. Élément formant filtre selon l'une quelconque des revendications précédentes, comprenant en outre une structure de support (4) attachée au bloc de milieu filtrant (2) de manière étanche, dans lequel le joint (3) est au moins partiellement (ou complètement) supporté par la structure de support (4).

5. Élément formant filtre selon la revendication 4, dans lequel la structure de support comprend une surface de bande lisse, continue, qui suit le joint, la surface de bande correspondant de préférence à la trajectoire en boucle fermée du joint, de sorte que pour chaque section ou portion du joint, il existe une portion correspondante de la surface de bande la supportant.

6. Élément formant filtre selon la revendication 5, dans lequel la surface de bande comprend une première portion et une seconde portion différente le long de la trajectoire en boucle fermée (sections longitudinales), définissant respectivement une première et une seconde direction normale, l'angle entre la première direction normale et la direction axiale de l'élément formant filtre étant différent de l'angle entre la seconde direction normale et la direction axiale de l'élément formant filtre.

7. Élément formant filtre selon l'une quelconque des revendications précédentes, comprenant une première portion de joint (30) le long de la trajectoire en boucle dans laquelle la direction d'étanchéité prédéterminée est de façon radiale vers l'extérieur depuis l'axe longitudinal et une seconde portion de joint (31) le long de la trajectoire en boucle dans laquelle la direction d'étanchéité prédéterminée est axiale, c'est-à-dire dans une direction qui correspond à l'axe longitudinal.

8. Élément formant filtre selon l'une quelconque des revendications précédentes, comprenant une première portion de joint (32) le long de la trajectoire en boucle dans laquelle la direction d'étanchéité prédéterminée est de façon radiale vers l'intérieur en direction de l'axe longitudinal et une seconde portion de joint (31) le long de la trajectoire en boucle dans laquelle la direction d'étanchéité prédéterminée est axiale, c'est-à-dire dans une direction qui correspond à l'axe longitudinal.

9. Élément formant filtre selon l'une quelconque des revendications précédentes, comprenant une première portion de joint (30) le long de la trajectoire en boucle dans laquelle la direction d'étanchéité prédéterminée est de façon radiale vers l'extérieur depuis l'axe longitudinal et une seconde portion de joint (32) le long de la trajectoire en boucle dans laquelle la direction d'étanchéité prédéterminée est de façon radiale vers l'intérieur en direction de l'axe longitudinal.

10. Élément formant filtre selon l'une quelconque des revendications précédentes, dans lequel une première portion de joint ou la première portion de joint (30, 31, 32) le long de la trajectoire en boucle est disposée au niveau d'une extrémité axiale du bloc de milieu filtrant (2) et dans lequel une seconde portion de joint ou la seconde portion de joint (30, 31, 32) le long de la trajectoire en boucle est disposée au niveau d'une portion orientée de façon radiale vers l'extérieur du bloc de milieu filtrant (2).

11. Élément formant filtre selon l'une quelconque des revendications précédentes, dans lequel une première portion de joint ou la première portion de joint (30, 31, 32) le long de la trajectoire en boucle est disposée au niveau d'une extrémité axiale du bloc de milieu filtrant (2) et dans lequel une seconde portion de joint ou la seconde portion de joint (30, 31, 32) le long de la trajectoire en boucle est disposée au niveau de l'extrémité axiale du bloc de milieu filtrant (2).

12. Élément formant filtre selon l'une quelconque des revendications précédentes, dans lequel une première portion de joint ou la première portion de joint (30, 31, 32) le long de la trajectoire en boucle est disposée au niveau d'une portion orientée de façon radiale vers l'extérieur du bloc de milieu filtrant (2) et dans lequel une seconde portion de joint ou la seconde portion de trajectoire en boucle (30, 31, 32) de la trajectoire en boucle est disposée au niveau de la portion orientée de façon radiale vers l'extérieur du bloc de milieu filtrant (2).

13. Élément formant filtre selon l'une quelconque des revendications précédentes, dans lequel une première portion de joint ou la première portion de joint et une seconde portion de joint ou la seconde portion de joint (3) s'étendent sur une longueur de la trajectoire en boucle fermée qui est supérieure à 5 % de la longueur de la trajectoire en boucle fermée.

14. Élément formant filtre selon l'une quelconque des revendications précédentes, dans lequel le joint (3) effectue une transition lisse et continue entre les directions de joint respectives d'une première et d'une seconde portion de joint.

15. Élément formant filtre selon l'une quelconque des revendications précédentes, dans lequel le joint (3) comprend un joint à lèvre comprenant une base et une ou plusieurs lèvres (3) s'étendant depuis ladite base.
